# EUROPÄISCHE PATENTANMELDUNG

(11) **EP 4 722 186 A1**
(43) Veröffentlichungstag der Anmeldung: **08.04.2026**
(21) Anmeldenummer: 24203814.9
(22) Anmeldetag: 01.10.2024
(51) Int. Cl.: C05F 9/04, A01G 13/35, A01G 17/18, A01G 18/00, C05F 11/00, C05F 11/02, C05G 3/80

(54) **TORFFREIE ABDECKERDE FÜR DIE PILZZUCHT**

(71) Anmelder: Lav Erdenwerke GmbH, 04420 Markranstädt (DE); Institut für Holztechnologie Dresden gGmbH, 01217 Dresden (DE)
(72) Erfinder: Rangno, Natalie, 01277 Dresden (DE); Schmidt, Detlef, 04329 Leipzig (DE); Windisch, Falko, 04229 Leipzig (DE)
(74) Vertreter: Hertin und Partner Rechts- und Patentanwälte PartG mbB

(57) **Zusammenfassung**

Die Erfindung betrifft eine torffreie Abdeckerde zur Pilzzucht, die aus mindestens einem organischen faserigen Material besteht. Sie umfasst 50 - 100 Vol% Grünschnittkompost und bis zu 50 Vol% Holzfasern.

Weiterhin wird eine Verwendung einer Abdeckerde zur Zucht von Pilzen beschrieben. Die Pilze sind bevorzugt ausgewählt aus der Familie der *Agaricaceae*, vorzugsweise *Agaricus bisporus* und *Agaricus subrufescens.*

## Beschreibung

Die Erfindung betrifft eine torffreie Abdeckerde zur Pilzzucht, die aus mindestens einem organischen faserigen Material besteht. Sie umfasst 50 - 100 Vol% Grünschnittkompost und bis zu 50 Vol% Holzfasern.

Weiterhin wird eine Verwendung einer Abdeckerde zur Zucht von Pilzen beschrieben. Die Pilze sind bevorzugt ausgewählt aus der Familie der *Agaricaceae,* vorzugsweise *Agaricus bisporus* und *Agaricus subrufescens.*

### Hintergrund und Stand der Technik

Die Pilzzucht, insbesondere die Zucht von Speisepilzen wie Champignons, hat in den letzten Jahrzehnten erheblich an Bedeutung gewonnen. Diese Entwicklung ist unter anderem auf die steigende Nachfrage nach Pilzen als Nahrungsmittel zurückzuführen. Pilze werden zum Beispiel auch aufgrund ihres hohen Gehalts an Proteinen, Ballaststoffen, Vitaminen und Mineralstoffen zunehmend als gesunde Alternative zu Fleisch und anderen tierischen Produkten geschätzt, was in Zeiten wachsender Gesundheitsbewusstheit und vegetarischer/veganer Ernährungstrends ihren Konsum weiter antreibt. Darüber hinaus haben Pilze in jüngster Zeit aufgrund ihrer bioaktiven Verbindungen, auch außerhalb des Nahrungsmittelsektors an Bedeutung gewonnen, etwa in der Biotechnologie und Medizin.

Die Menge an Pilzzucht zeigt tendenziell einen steigenden Trend, was auf den wachsenden Verbrauch von Pilzen in der Gesellschaft zurückzuführen ist. Die weltweite Produktion von Pilzen, insbesondere von Champignons, nimmt kontinuierlich zu, um der steigenden Nachfrage gerecht zu werden.

Die Nutzung von Torf in der Pilzzucht, insbesondere bei der Kultivierung von Speisepilzen wie Champignons, stellt ein erhebliches umweltbezogenes Problem dar. Torf wird traditionell in Abdeckerden für die Pilzzucht verwendet, da er hervorragende Eigenschaften in Bezug auf die Wasserspeicherung aufweist. Nachteilig ist die fast völlige Nährstofffreiheit von Torf, und der extrem niedrige pH-Wert, den man mit Zusatzstoffen aufwendig anpassen muss. Er bietet eine sehr gute Wachstumsumgebung für Pilze, was dazu führt, dass er in der kommerziellen Zucht weit verbreitet ist. Allerdings führt die großflächige Nutzung von Torf zu ernsthaften ökologischen Herausforderungen.

Ein großes Problem ist die Entwässerung und der Abbau von Mooren zur Gewinnung von Torf. Moore sind empfindliche Ökosysteme, die eine wichtige Rolle im globalen Kohlenstoffkreislauf spielen. Sie speichern enorme Mengen an Kohlenstoff, und ihre Zerstörung führt zur Freisetzung dieses Kohlenstoffs in Form von Kohlendioxid (CO₂), was wesentlich zur globalen Erwärmung beiträgt. Außerdem führt die Zerstörung von Mooren zum Verlust von Biodiversität, da viele spezialisierte Pflanzen- und Tierarten von diesen Lebensräumen abhängen.

Ein weiteres Problem ist die Nicht-Nachhaltigkeit der Torfgewinnung. Torf entsteht sehr langsam über Jahrtausende, was bedeutet, dass die derzeitige Nutzung weitaus schneller erfolgt, als sich die Torfressourcen regenerieren können. Dies führt zu einem ständigen Rückgang der verfügbaren Torfvorkommen. Eine Verfügbarkeit von Torf in der Zukunft kann bei dem aktuellen Level an Torfabbau daher nicht gewährleistet werden.

Die Nutzung von Torf in der Pilzzucht stellt also ein signifikantes Umweltproblem dar, das sowohl den Klimawandel als auch den Verlust von Biodiversität beschleunigt. Die Entwicklung und Implementierung nachhaltiger Alternativen ist daher ein wichtiger Schritt zur Verringerung der ökologischen Auswirkungen der Pilzproduktion.

### Aufgabe der Erfindung

Eine Aufgabe der Erfindung ist es daher, eine torffreie Abdeckerde für die Pilzzucht bereitzustellen.

Eine Aufgabe der Erfindung kann es sein, eine nachhaltige Abdeckerde für die Pilzzucht bereitzustellen.

Eine weitere Aufgabe der Erfindung ist es, eine torffreie Abdeckerde für die Pilzzucht bereitzustellen, die alle Anforderungen an torfhaltige Abdeckerden erfüllt.

Eine weitere Aufgabe der Erfindung ist es, eine Verwendung für eine torffreie Abdeckerde für die Zucht von Pilzen, bevorzugt aus der Familie der *Agaricaceae* bereitzustellen.

### Zusammenfassung der Erfindung

Die erfindungsgemäße Aufgabe wird durch die Merkmale der unabhängigen Ansprüche gelöst.

Vorteilhafte Ausgestaltungen der Erfindung sind in den abhängigen Ansprüchen beschrieben.

In der vorliegenden Anmeldung werden die Begriffe 'Erde', 'Abdeckerde' und 'Material' sowohl für die Abdeckerde als auch in allgemeinen Definitionen verwendet. Die Begriffe können sowohl die gesamte Zusammensetzung einer Erde oder Abdeckerde als auch einzelne Bestandteile, oder Mischungen aus nur einigen Bestandteilen davon bezeichnen. Diese Begriffe sind flexibel zu verstehen und der Fachmann ist in der Lage diese Begriffe im jeweiligen Kontext zu verstehen.

In einem ersten Aspekt betrifft die Erfindung eine torffreie Abdeckerde zur Pilzzucht bestehend aus mindestens einem organischen, faserigen Material, wobei die torffreie Abdeckerde 50 - 100 Vol% Grünschnittkompost und bis zu 50 Vol% Holzfasern umfasst.

Abdeckerde in der Pilzzucht bezeichnet bevorzugt eine spezielle Deckschicht, die auf das eigentliche Substrat aufgebracht wird, in dem das Myzel wächst. Sie dient bevorzugt dazu, ein geeignetes Mikroklima für die Fruchtkörperbildung zu schaffen, indem sie zum Beispiel die Feuchtigkeit bereitstellt und reguliert, sowie eine konstante Umgebungstemperatur gewährleistet. Sie spielt bevorzugt eine Rolle bei der Initiierung und Förderung des Wachstums der Fruchtkörper der Pilze, indem sie bevorzugt eine physische Barriere schafft, die das Myzel zur Fruchtkörperbildung anregt. Abdeckerde schützt bevorzugt auch das darunterliegende Substrat vor Austrocknung.

Organische, faserige Materialien sind bevorzugt Substanzen, die aus natürlichen Quellen stammen und durch ihre langkettige, fadenförmige Struktur charakterisiert sind. Diese Materialien bestehen bevorzugt hauptsächlich aus Kohlenstoffverbindungen und können pflanzlichen oder tierischen Ursprungs sein. Pflanzliche Fasern, wie sie in Holz, Stroh oder Blättern vorkommen, bestehen insbesondere aus Zellulose, Hemizellulose und Lignin, die den Fasern bevorzugt mechanische Festigkeit und Flexibilität verleihen. Solche Materialien sind in der Regel biologisch abbaubar und zeichnen sich bevorzugt durch eine hohe Zugfestigkeit und Wasserhaltefähigkeit aus, wodurch sie vorteilhaft für eine Anwendung als Bestandteil einer torffreien Abdeckerde sind.

Organische faserige Materialien umfassen bevorzugt auch Grünschnittkompost. Dieser wird bevorzugt durch die Kompostierung von pflanzlichen Abfällen wie zum Beispiel Gras, Strauchschnitt und Laub hergestellt. Diese Materialien enthalten insbesondere natürliche Fasern, die aus Zellulose und anderen pflanzlichen Strukturelementen bestehen. Während des Kompostierungsprozesses bleiben viele dieser Fasern bevorzugt weitgehend intakt, was dem Kompost bevorzugt eine faserige Struktur verleiht. Diese faserige Struktur macht Grünschnittkompost zu einem überraschend vorteilhaften Material für den Einsatz in Abdeckerden, da er die Struktur und Wasserhaltefähigkeit des Materials verbessert.

In der Verwendung als Bestandteil von Abdeckerden bietet Grünschnittkompost mehrere Vorteile. Durch die enthaltenen organischen Fasern trägt der Kompost bevorzugt zur Lockerung und Stabilisierung der Deckschicht bei, was die Wasserinfiltration und Belüftung fördert. Die faserigen Bestandteile des Grünschnittkomposts verbessern bevorzugt die Fähigkeit der Abdeckerde, Wasser zu speichern und gleichmäßig an Pflanzen abzugeben. Zudem unterstützt der organische Gehalt des Komposts bevorzugt die biologische Aktivität in dem Material.

Grünschnittkompost unterscheidet sich in mehreren wesentlichen Aspekten von nicht kompostierten organischen, faserigen Materialien, wobei diese Unterschiede bevorzugt auf die biologischen und chemischen Prozesse zurückzuführen sind, die während der Kompostierung ablaufen. Durch die Kompostierung werden die in den pflanzlichen Materialien enthaltenen Nährstoffe bevorzugt in eine Form umgewandelt, die für Pflanzen leichter zugänglich ist. Mikroorganismen zersetzen komplexe organische Verbindungen und setzen dabei bevorzugt Nährstoffe wie zum Beispiel Stickstoff und Phosphor frei, die das Wachstum fördern.

Insbesondere während des Kompostierungsprozesses entsteht eine bevorzugt vielfältige mikrobielle Gemeinschaft, die bevorzugt auch nach der Ausbringung des Komposts aktiv bleibt.

Der Grünschnittkompost kann bevorzugt auch Mikroorganismen enthalten, welche die Fruchtkörperbildung des Pilzes stimulieren. Außerdem kann der Grünschnittkompost bevorzugt auch Mikroorganismen enthalten, welche die Myzelstruktur positiv beeinflussen und sich wachstumsfördernd auf das Myzel auswirken. Diese vorteilhaften Mikrooganismen sind antagonistisch gegenüber Konkurrenzpilzen und wachstumshemmenden Bakterien, d.h. sie unterdrücken diese aktiv oder beseitigen ihre negativen Wirkungen. Die im Grünschnittkompost enthaltenen Mikroorganismen oder hinzugefügte vorteilhaften Mikroorganismen tragen bevorzugt zur Gesundheit der Pilze bei.

Grünschnittkompost zeichnet sich zudem durch seine Stabilität und Reife aus. Der Kompostierungsprozess stabilisiert das Material, indem es weitgehend zersetzt wird und somit weniger anfällig für weitere schnelle Zersetzungsprozesse ist. Ein reifer Kompost setzt seine Nährstoffe bevorzugt langsam und kontinuierlich frei.

Die hohen Temperaturen, die während des Kompostierungsprozesses erreicht werden, töten bevorzugt viele Krankheitserreger und Unkrautsamen ab. Hierdurch wird bevorzugt das Risiko der Ausbreitung von Krankheiten und Unkräutern minimiert. Gleichzeitig überleben bevorzugt nützliche, hitzeresistente Mikroorganismen und besiedeln das Material nach dem Abkühlen wieder neu und schaffen für die Abdeckerde geeignete Bedingungen.

Der Kompostierungsprozess verleiht dem Material bevorzugt eine gleichmäßigere Struktur, sowie ein vorteilhaftes Gleichgewicht zwischen Wasserhaltefähigkeit und Drainage. Dadurch wird bevorzugt die Struktur des Materials positiv beeinflusst und die kontinuierliche Versorgung der Pilze mit Flüssigkeit ermöglicht.

Holzfasern sind ein weiteres Beispiel für organische, faserige Materialien. Sie bestehen insbesondere aus Zellulose und Lignin, die ihnen eine besonders robuste und dauerhaft faserige Struktur verleihen. In der Abdeckerde tragen Holzfasern insbesondere dazu bei, die Struktur der Erde zu verbessern, indem sie das Porenvolumen erhöhen und die Belüftung des Materials fördern. Sie weisen außerdem eine ausgeprägte Fähigkeit auf, Wasser zu speichern. Diese Eigenschaften helfen bevorzugt dabei, das Mikroklima in der Deckschicht zu regulieren und positiv zu beeinflussen. Holzfasern zersetzen sich bevorzugt langsam, wodurch vorteilhafterweise eine langfristige Stabilität und Funktionalität der Abdeckerde gefördert werden kann. Die Zugabe von Holzfasern beeinflusst also bevorzugt auch die strukturellen und physikalischen Eigenschaften der Abdeckerde vorteilhaft.

Wenn Grünschnittkompost und Holzfasern in der Abdeckerde kombiniert werden, ergänzen sich die Eigenschaften beider Materialien vorteilhaft. Grünschnittkompost sorgt bevorzugt für eine hohe Nährstoffverfügbarkeit, gesteigerte mikrobielle Aktivität und eine verbesserte Wasserhaltefähigkeit. Holzfasern tragen durch ihre robuste, faserige Struktur bevorzugt zur langfristigen Stabilität des Materials bei. Sie verbessern insbesondere die physikalische Struktur der Erde, indem sie bevorzugt die Belüftung fördern und das Porenvolumen erhöhen. Durch ihre Fähigkeit, Wasser langfristig zu speichern und langsam abzugeben, tragen Holzfasern bevorzugt dazu bei, die Feuchtigkeit im Material gleichmäßig zu regulieren. Die synergistische Wirkung beider Materialien kann bevorzugt die Qualität insgesamt verbessern, das Pilzwachstum fördern und gleichzeitig die Langlebigkeit und Stabilität der Abdeckerde erhöhen.

Es kann bevorzugt sein, dass die Abdeckerde100 Vol% Grünschnittkompost umfasst.

Es kann ebenfalls bevorzugt sein, dass das Mischverhältniss der Abdeckerde zwischen 50 Vol% Grünschnittkompost gemischt mit 50 Vol% Holzfasern; und 100 Vol% Grünschnittkompost variiert. Hierbei können alle dazwischenliegenden Mischverhältnisse vorgesehen sein.

Es kann ebenfalls bevorzugt sein, dass die Anteile von Grünschnittkompost und Holzfasern individuell stufenlos zwischen den beiden Randbereichen von 100 Vol% Grünschnittkompost zu 50 Vol% Grünschnittkompost; und 0 Vol% Holzfasern zu 50 Vol% Holzfasern variiert. Es kann dabei ebenfalls bevorzugt sein, dass die Anteile von Grünschnittkompost plus Holzfasern aufaddiert weniger als 100 Vol% ergeben.

Ein besonders bevorzugtes Mischverhältnis liegt bei 70 Vol% Grünschnittkompost und 30 Vol% Holzfasern

In einer weiteren bevorzugten Ausführungsform umfasst die Abdeckerde 0,5 - 5 Vol% Calciumsulfat.

Calciumsulfat (CaSO₄) ist bevorzugt ein anorganisches Salz, das in verschiedenen Hydratationsstufen vorkommt, wobei Dihydrat (CaSO₄·2H₂O), besser bekannt als Gips, die häufigste Form ist. Es besitzt bevorzugt eine hohe chemische Stabilität, wodurch es für vielfältige Anwendungen geeignet ist. Calciumsulfat ist in Wasser nur geringfügig löslich und wirkt als pHneutraler Mineralstoff. Insbesondere kann es zur Strukturverbesserung und als Kalziumquelle eingesetzt werden und die Verfügbarkeit von Nährstoffen in der Erde zu fördern. Calciumsulfat spielt bevorzugt ebenfalls eine Rolle bei der Regulation des Wasserhaushalts in der Erde.

In Abdeckerden, die zur Kultivierung von Pilzen, insbesondere Champignons, verwendet werden, dient Calciumsulfat bevorzugt als Stabilisator. Calciumsulfat verbessert bevorzugt die physikalischen Eigenschaften der Abdeckerde, indem es die Verdichtung hemmt und die Porosität erhöht. Dadurch kann es bevorzugt zu einer besseren Luftzirkulation und einer gleichmäßigen Wasserverteilung kommen, wodurch das Myzel effizient Fruchtkörper bilden kann.

Calciumsulfat dient in Abdeckerden bevorzugt als Quelle für Kalzium, einem wichtigen sekundären Nährstoff für das Wachstum von Pilzen. Außerdem unterstützt es bevorzugt die Entwicklung des Myzels. Calciumsulfat verbessert bevorzugt die Struktur der Abdeckerde, indem es die Wasserhaltekapazität und Drainage positiv beeinflusst. Dadurch kommt es bevorzugt zu einem verbesserten Wasser-Luft-Verhältnis, wodurch eine erfolgreiche Fruktifikation von Pilzen ermöglicht wird. Calciumsulfat kann außerdem bevorzugt eine übermäßige Verdichtung der Abdeckerde verhindern, was sich positiv auf das Wachstum des Myzels auswirken kann.

Die Kombination von Grünschnittkompost, Holzfasern und Calciumsulfat bietet besonders vorteilhafte Bedingungen in einer Abdeckerde für die Pilzzucht. Grünschnittkompost liefert bevorzugt eine organische Substanz, die die mikrobiellen Prozesse in der Erde fördert und die Nährstoffversorgung ermöglicht. Holzfasern erhöhen bevorzugt die Porosität und sorgen für eine verbesserte Belüftung und Drainage und reduzieren das Risiko von Verdichtungen. Calciumsulfat verbessert die Wasserhaltekapazität und die Kalziumversorgung. Insbesondere diese Kombination führt zu einer besonders vorteilhaften Qualität der Abdeckerde und einem besonders guten Ertrag in der Pilzzucht.

Ein Anteil von 0,5 bis 5 % Calciumsulfat in der Abdeckerde ist bevorzugt, da er die positiven Eigenschaften des Calciumsulfats nutzt, ohne die physikalischen und chemischen Eigenschaften der Abdeckerde negativ zu beeinflussen.

Durch diese Menge wird bevorzugt eine Überdosierung vermieden, die zu einer Überhärtung der Abdeckerde führen könnte. Durch eine solche Verhärtung könnte der Gasaustausch und die Wasserbewegung beeinträchtigen werden. Ein höherer Anteil könnte auch das mikrobiologische Gleichgewicht stören.

Diese Menge ermöglicht eine ausreichende Calciumversorgung, die für die Unterstützung der Mikroorganismen förderlich ist.

In einer weiteren bevorzugten Ausführungsform umfasst die Abdeckerde 0,5 - 5 Vol% Calciumcarbonat.

Calciumcarbonat (CaCO₃) ist bevorzugt eine chemische Verbindung, die in der Natur insbesondere in Form von Kalkstein, Marmor und Kreide vorliegt. Es handelt sich um Calcium, Kohlenstoff und Sauerstoff, welches bevorzugt in einem trigonalen System kristallisiert. Calciumcarbonat ist in Wasser bevorzugt kaum löslich. Calciumcarbonat reagiert bevorzugt in sauren Lösungen und setzt dabei Kohlendioxid (CO₂) frei. Es findet zum Beispiel in der der Wasseraufbereitung oder zur Neutralisierung von Säuren Anwendung. Calciumcarbonat kann außerdem bevorzugt als Kalkdünger den pH-Wert von saurer Erde anheben. Durch seine Pufferwirkung trägt Calciumcarbonat bevorzugt zur Stabilisierung des pH-Wertes bei und verbessert die Verfügbarkeit von Nährstoffen für Pflanzen.

Calciumcarbonat dient in der Abdeckerde insbesondere zur pH-Stabilisierung. Da viele Pilzarten, insbesondere Champignons, einen leicht alkalischen pH-Bereich bevorzugen, kann Calciumcarbonat hier vorteilhaft eingesetzt werden. Durch die Pufferwirkung von Calciumcarbonat wird bevorzugt verhindert, dass der pH-Wert in der Erde zum Beispiel durch mikrobielle Aktivität oder Zersetzungsprozesse zu stark absinkt. Zusätzlich trägt Calciumcarbonat bevorzugt dazu bei, die Struktur der Abdeckerde zu stabilisieren und die Belüftung und die Wasserverteilung zu verbessern.

Ein Anteil von 0,5 - 5 Vol% Calciumcarbonat ist besonders vorteilhaft, sich diese Menge bevorzugt positiv auf die Struktur der Abdeckerde auswirkt. Die bevorzugte Menge an Calciumcarbonat hilft, die Erde locker und gut durchlüftet zu halten, ohne sie zu stark zu verdichten. Dies fördert bevorzugt den Gasaustausch und die Feuchtigkeitsregulierung, die für ein gesundes Pilzwachstum wichtig sind.

In einer weiteren bevorzugten Ausführungsform umfasst die Abdeckerde bis zu 5 Vol% einer Proteinquelle.

Eine Proteinquelle bezeichnet bevorzugt organische Materialien, die reich an pflanzlichem Eiweiß sind und als Nährstoffquelle für Mikroorganismen und das Pilzmyzel dienen können. Diese Proteine werden bevorzugt durch mikrobielle Zersetzungsprozesse abgebaut und in bioverfügbare Formen umgewandelt, die die Entwicklung des Myzels unterstützen. Proteinquellen tragen somit bevorzugt zur Nährstoffdynamik der Abdeckerde bei. Außerdem fördern sie bevorzugt die biologische Aktivität und bieten für die Fruchtkörperbildung förderliche essenzielle Stickstoffverbindungen.

Proteinquellen können zum Beispiel bereits im Grünschnittkompost vorliegen, sie können jedoch auch zugesetzt werden.

In einer weiteren bevorzugten Ausführungsform können die zugesetzten Proteinquellen bevorzugt ausgewählt sein aus einer Gruppe umfassend Leguminosen, wie zum Beispiel Luzerne, Lupine, Soja, Kleearten, Erbsen, Linsen; Getreide/Pseudogetreide, wie zum Beispiel Amaranth, Dinkel, Quinoa, Hafer, Hirse, Weizen, Roggen, Gerste, Mais; andere proteinreiche Pflanzen wie zum Beispiel Hanf, Flachs, Sonnenblumenkerne, Raps, und Kürbiskerne.

Der Fachmann versteht, dass die Proteinquellen einzeln, oder in Kombination zugesetzt werden können.

Das Hinzufügen von Proteinquellen zur Abdeckerde in der Pilzzucht fördert bevorzugt die mikrobielle Aktivität in der Abdeckschicht. Mikroorganismen, wie Bakterien und Pilze, nutzen Proteine bevorzugt als Nährstoffquelle, insbesondere als Stickstoffquelle, die für ihr Wachstum und ihre Funktionen wichtig ist. Eine höhere Aktivität dieser Mikroorganismen unterstützt bevorzugt biochemische Prozesse, die das Myzel dazu anregen, von der Wachstumsphase in die Fruchtkörperbildung überzugehen.

Zusätzlich können bestimmte Proteinquellen wasserbindende Eigenschaften haben, wodurch sie dazu beitragen können, die Feuchtigkeit in der Abdeckerde länger zu halten. Eine gleichmäßige und stabile Feuchtigkeitsversorgung ist für die Pilze wichtig, besonders in der Phase der Fruchtkörperbildung.

Ein Anteil von bis zu 5 Vol% an Proteinquellen in der Abdeckerde hat sich als besonders vorteilhaft erwiesen, um die Aktivität von Mikroorganismen zu fördern, ohne dabei negative Effekte wie Nährstoffüberschuss oder unerwünschtes Bakterienwachstum zu verursachen. Bei einem Anteil in dieser Größenordnung werden bevorzugt genügend Proteine zur Verfügung gestellt, um das Wachstum und die Aktivität der Mikroorganismen zu stimulieren, ohne jedoch das mikrobiologische Gleichgewicht zu stören.

In einer weiteren bevorzugten Ausführungsform umfasst die Abdeckerde bis zu 30 Vol% Rindenhumus.

Rindenhumus bezeichnet bevorzugt ein organisches Material, das durch die Zersetzung von Baumrinde entsteht. Im Gegensatz zu frischer Rinde ist Rindenhumus bevorzugt mikrobiell abgebaut und hat dadurch eine humusähnliche Struktur. Durch den Zersetzungsprozess wird bevorzugt der Gehalt an aggressiven Gerbstoffen reduziert. Rindenhumus wird bevorzugt zur Verbesserung der Struktur eingesetzt, da er die Wasserhaltefähigkeit und Belüftung des Materials fördert und die biologische Aktivität stimuliert. Vorteilhafterweise sorgt der Rindenhumus in der Abdeckerde für eine Stabilisierung der Struktur und sorgt so für eine gute Verfügbarkeit von Wasser und für eine gute Durchlüftung der Abdeckerde. Dies ist besonders vorteilhaft für das Myzelwachstum von Pilzen.

Eine Menge von nicht mehr als 30 Vol% Rindenhumus ist besonders bevorzugt, weil es in dieser Menge positiv zur Lockerung der Abdeckerde beiträgt, indem es die Luftdurchlässigkeit und den Wasserhaushalt unterstützt. Ein Anteil von bis zu 30 % bietet genug organisches Material, um die Feuchtigkeitsregulierung zu unterstützen, ohne die Abdeckerde zu stark zu verdichten oder ihre Struktur zu destabilisieren.

In einer weiteren bevorzugten Ausführungsform umfasst die Abdeckerde bis zu 30 Vol% Holzschaum.

Holzschaum bezeichnet bevorzugt ein leichtes, poröses Material, das aus Holz hergestellt wird. Es entsteht bevorzugt durch die physikalische oder chemische Aufschäumung von Holzfasern oder Zellulose, wobei ein Schaum mit einer schwammartigen Struktur gebildet wird. Die Poren im Holzschaum verleihen ihm eine geringe Dichte.

In der Abdeckerde kann der Holzschaum bevorzugt die Wasserhaltefähigkeit und Belüftung positiv beeinflussen, was für Abdeckerden in der Pilzzucht von besonderer Bedeutung ist.

Ein Anteil von maximal 30 Vol% Holzschaum ist besonders bevorzugt, weil er in dieser Menge bevorzugt positiv zur Feuchtigkeitsregulierung und Durchlüftung beitragt, ohne die Struktur negativ zu beeinflussen. Eine zu hohe Menge (>30 Vol%) an Holzschaum könnte die vorteilhafte Mikrobiologie negativ beeinflussen.

In einer weiteren bevorzugten Ausführungsform umfasst die Abdeckerde 0,15 - 1,5 Vol% eines oder mehrerer Dünger. Die Dünger umfassen bevorzugt die Makronährstoffe Stickstoff (N) und Phosphor (P).

Makronährstoffe bezeichnen bevorzugt essenzielle Nährstoffe, die in relativ großen Mengen von Pflanzen, Tieren oder Pilzen benötigt werden, um grundlegende Wachstums- und Stoffwechselprozesse aufrechtzuerhalten. Zu den primären Makronährstoffen gehören bevorzugt Stickstoff (N), Phosphor (P) und Kalium (K), die zum Beispiel für die Zellteilung, Energieübertragung und den Nährstofftransport wichtig sind. Außerdem zählen bevorzugt auch Kalzium (Ca), Magnesium (Mg) und Schwefel (S) zu den Makronährstoffen.

Ein Dünger bezeichnet bevorzugt eine Substanz, die einer Erde oder Pflanzen zugeführt wird, um deren Nährstoffversorgung zu verbessern und somit das Wachstum zu fördern. Dünger können bevorzugt sowohl organischer als auch anorganischer Herkunft sein und können essentielle Nährstoffe wie zum Beispiel Stickstoff (N), Phosphor (P) enthalten. Durch die Zugabe von Düngemitteln werden der Erde bevorzugt Nährstoffe zugeführt oder ergänzt, um eine geeignete Nährstoffverfügbarkeit und/oder Fruchtbarkeit aufrechtzuerhalten.

Bevorzugt umfasst der Dünger Stickstoff und Phosphor, da er die Aktivität der Mikroorganismen unterstützt, die für die Fruchtkörperbildung wichtig ist. Mikroorganismen, insbesondere Bakterien, die in der Abdeckerde leben, sind wichtig für die Induktion der Fruchtkörperbildung. Stickstoff ist dabei bevorzugt ein wichtiger Baustein für Proteine und Nukleinsäuren, Phosphor ist wichtig für die Energieübertragung in den Zellen. Durch die Bereitstellung dieser Nährstoffe wird bevorzugt das Wachstum und die Funktion der Mikroorganismen positiv beeinflusst, wodurch biochemische Prozesse beschleunigt werden können, die das Myzel zur Fruchtkörperbildung anregen.

Die Mikroorganismen setzen durch ihren Stoffwechsel bevorzugt Signalmoleküle frei, die das Myzel stimulieren und den Übergang von der vegetativen Phase zur Fruchtkörperbildung anstoßen. Die ausreichende Versorgung der Mikroorganismen mit Stickstoff und Phosphor verhindert bevorzugt auch Nährstoffmangel, wodurch das mikrobielle Gleichgewicht gestört werden könnte. Dadurch entsteht bevorzugt ein stabiles Umfeld in der Abdeckerde und gute Bedingungen für die Fruchtkörperbildung. Durch die richtige Menge an Stickstoff und Phosphor wird also das Wachstum erwünschter Mikroorganismen bevorzugt gefördert, ohne dabei unerwünschte Organismen zu fördern.

Daher wird für die Abdeckerde bevorzugt eine gezielte Versorgung mit Stickstoff und Phosphor bereitgestellt, während auf größere Mengen Kalium verzichtet wird.

Eine Menge von 0,5 bis 1,5 % des Düngers sorgt bevorzugt dafür, dass die Mikroorganismen ausreichend Nährstoffe zur Verfügung haben, das Risiko einer Überdüngung wird bei dieser Menge jedoch minimiert. Zu hohe Düngermengen (>1,5 Vol%) könnten das mikrobielle Gleichgewicht stören und das Risiko erhöhen, dass sich unerwünschte Organismen in der Abdeckerde ansiedeln.

In einer weiteren bevorzugten Ausführungsform umfasst die Abdeckerde bis zu 10 Vol% Ton, wobei der Ton bevorzugt in Form von Pulver vorliegt.

Ton bezeichnet bevorzugt ein feinkörniges, mineralisches Material, das überwiegend aus Mineralien wie Kaolinit, Illit oder Montmorillonit besteht. Diese Minerale entstehen bevorzugt durch die Verwitterung von Silikatgestein und besitzen bevorzugt eine plättchenartige Struktur. Tonpartikel haben bevorzugt eine Korngröße von ≤2 µm, was ihnen eine hohe spezifische Oberfläche verleiht. Aufgrund dieser Struktur kann Ton bevorzugt große Mengen an Wasser aufnehmen und quellen, was ihm eine hohe Plastizität verleiht.

In der Abdeckerde sorgt der Ton bevorzugt für eine verbesserte Nährstoffspeicherung und Wasserspeicherfähigkeit.

Dass der Ton der Abdeckerde in Form von Pulver zugesetzt wird, sorgt insbesondere dafür, dass die feine Körnung des Tonpulvers eine große verfügbare Oberfläche aufweist, wodurch der Ton bevorzugt in der Lage ist, Wasser und Nährstoffe effektiver zu binden und langsam freizusetzen. Dadurch trägt er bevorzugt zu einer gleichmäßigen Feuchtigkeitsregulierung bei, was sich bevorzugt positiv auf das Myzelwachstum und die Fruchtkörperbildung von Pilzen auswirkt. Zudem verbessert Tonpulver bevorzugt die Struktur der Abdeckerde, indem es die Krümelung der Erde fördert, wodurch die Abdeckerde stabiler wird. Dies reduziert bevorzugt das Verdichten der Erde und ermöglicht eine verbesserte Belüftung und Wasserdurchlässigkeit, was sich positiv auf das Myzelwachstum und die Fruchtkörperbildung auswirkt. Außerdem kann Ton durch seine Pufferwirkung bevorzugt zu einer Stabilisierung des pH-Wertes in der Abdeckerde beitragen.

in Anteil von bis zu 10 Vol% Ton in der Abdeckerde ist bevorzugt, weil er die Struktur der Abdeckerde nicht zu stark zu beeinflusst und trotzdem die positiven Eigenschaften des Tons zum Tragen kommen. Ein moderater Anteil in dieser Größenordnung verbessert bevorzugt die Wasserhaltefähigkeit und die Stabilität der Abdeckerde, ohne sie zu stark zu verdichten. Bei höheren Anteilen wäre es möglich, dass die Abdeckerde zu dicht wird. Dadurch könnte die Luftdurchlässigkeit eingeschränkt und die Sauerstoffversorgung für das Myzel behindert werden.

Ein Anteil von bis zu 10 Vol% ist bevorzugt ausreichend, um eine gleichmäßige Feuchtigkeitsabgabe sicherzustellen, während die Struktur der Abdeckerde dennoch locker und durchlässig bleibt. Gleichzeitig bleibt der pH-Wert stabil, und das Risiko von Verdichtungen, die die Belüftung beeinträchtigen könnten, wird vermieden. Damit stellt dieser Anteil einen idealen Kompromiss dar, um die Vorteile des Tons zu nutzen, ohne die Nachteile einer übermäßigen Verdichtung oder schlechter Durchlüftung in Kauf nehmen zu müssen.

In einer weiteren bevorzugten Ausführungsform weist der Grünschnittkompost eine Körnigkeit von 0 bis ≤25 mm, und/oder einen pH-Wert von 6,5 bis 8,5, bevorzugt 7,0 bis 8,5, besonders bevorzugt 7,5 bis 8,5 auf.

Körnigkeit bezeichnet bevorzugt die Partikelgröße eines granulären Materials, insbesondere des Grünschnittkomposts, also die Größe und Verteilung der einzelnen Körner oder Partikel innerhalb eines bestimmten Bereichs. Sie wird bevorzugt in Millimetern angegeben und dient dazu, das Material nach seiner Korngröße zu klassifizieren. Die Körnigkeit hat insbesondere Einfluss auf die physikalischen Eigenschaften wie Wasser- und Luftdurchlässigkeit, Stabilität und Verdichtung des Materials.

Eine Körnigkeit von 0 bis 25 mm bedeutet bevorzugt, dass das Material Partikel enthält, die in einem Größenbereich von sehr fein (0 mm, d. h. feiner Staub oder Pulver) bis zu maximal 25 mm (kleine Kiesel oder gröbere Partikel) liegen. Diese Mischung von sehr feinen mit gröberen Partikeln sorgt bevorzugt für eine gute Verdichtbarkeit (durch die feinen Anteile) und gleichzeitig guter Drainage (durch die größeren Anteile).

Der Fachmann erkennt, dass die Körnigkeit des Grünschnittkomposts den gesamten genannten Bereich, oder auch nur einen Teilbereich des genannten Bereiches abdecken kann.

Der pH-Wertbezeichnet bevorzugt eine Maßzahl, die den Säure- oder Basengehalt einer wässrigen Lösung angibt. Er beschreibt die Konzentration von Wasserstoffionen (H⁺) und wird auf einer Skala von 0 bis 14 gemessen. Ein pH-Wert von 7 ist neutral, Lösungen mit Werten unter 7 sind sauer, und Lösungen mit Werten über 7 sind basisch (alkalisch).

Der pH-Wert beeinflusst viele chemische und biologische Prozesse, da er die Verfügbarkeit von Nährstoffen, die Aktivität von Enzymen und die mikrobielle Aktivität in der Erde steuert. In der Landwirtschaft und im Gartenbau ist der pH-Wert ein wichtiger Faktor für das Pflanzenwachstum, da er die Fruchtbarkeit und die Nährstoffaufnahme beeinflusst.

Ein pH-Wert innerhalb des bevorzugten Bereichs ist für Grünschnittkompost in der Abdeckerde besonders vorteilhaft. Viele Pilzarten, insbesondere Champignons bevorzugen ein solches Milieu und zeigen dort ein besonders vorteilhaftes Wachstum. Der bevorzugte pH-Wert sorgt bevorzugt für eine besonders gute Verfügbarkeit von Nährstoffen in der Abdeckerde. Gleichzeitig hemmt er bevorzugt die Aktivität von unerwünschten oder pathogenen Mikroorganismen, die sich in saurer Umgebung vermehren. Ein pH-Wert innerhalb des bevorzugten Bereichs unterstützt außerdem bevorzugt die Stabilität des Myzels.

In einer weiteren bevorzugten Ausführungsform weisen die Holzfasern einen pH-Wert von 5,0 bis 5,5 auf.

Holzfasern mit einem leicht sauren pH-Wert von 5,0 bis 5,5 können in der Abdeckerde von Vorteil sein, auch wenn Pilze wie Champignons ein leicht alkalisches Milieu für die Fruchtkörperbildung bevorzugen. Die sauren Holzfasern schaffen bevorzugt Mikrobereiche im Material, die unterschiedliche pH-Bedingungen aufweisen und so bevorzugt die mikrobielle Vielfalt und Aktivität fördern, indem auch pH-Bereiche geschaffen werden für Mikroorganismen, die leicht saure Bedingungen bevorzugen. Vielfältige Mikroorganismen spielen eine wichtige Rolle insbesondere bei der Zersetzung organischer Materialien und der Freisetzung von Nährstoffen, die für das Myzelwachstum erforderlich sind.

Außerdem können die leicht sauren Holzfasern bevorzugt als Puffer in der Erde wirken, wodurch plötzliche pH-Schwankungen ausgeglichen werden können. Die Kombination von sauren und alkalischen Bereichen in der Erde kann außerdem bevorzugt dazu beitragen, dass sowohl die Nährstoffe, die in sauren Bedingungen besser verfügbar sind (wie zum Beispiel Eisen und Mangan), als auch die Nährstoffe, die in alkalischen Bereichen besser verfügbar sind, zur Verfügung stehen.

Insbesondere durch diese ausgewogene Kombination von leicht alkalischem Grünschnittkompost und leicht sauren Holzfasern kann ein stabiles und nährstoffreiches Milieu geschaffen werden, das das Pilzwachstum fördert, ohne den pH-Wert der gesamten Erde zu sehr in den sauren Bereich zu verschieben.

In einer weiteren bevorzugten Ausführungsform weist die torffreie Abdeckerde eine Wasserspeicherfähigkeit von 50 bis 150 Vol% auf.

Der Begriff Wasserspeicherfähigkeit bezeichnet bevorzugt die Fähigkeit eines Materials, Wasser aufzunehmen und zu speichern. Das Wasser bleibt dabei bevorzugt für Pflanzen, Pilze oder andere Organismen verfügbar. Die Wasserspeicherfähigkeit hängt von der Struktur und Zusammensetzung des Materials ab. Feinere Partikel, wie Ton oder organische Substanzen, wie Humus können bevorzugt mehr Wasser binden als grobkörnige Materialien wie Sand. Eine hohe Wasserspeicherfähigkeit sorgt bevorzugt dafür, dass das Material Wasser über einen längeren Zeitraum speichern kann und gleichmäßig abgeben kann.

Eine Wasserspeicherfähigkeit von 50 bis 150 Vol% bedeutet bevorzugt, dass die Abdeckerde in der Lage ist, das 0,5- bis 1,5-fache seines eigenen Volumens an Wasser zu speichern. Diese hohe Wasserspeicherfähigkeit ist besonders vorteilhaft, da sie dazu beiträgt, dass die Pilze über längere Zeiträume hinweg gleichmäßig mit Wasser versorgt werden. Dadurch entsteht bevorzugt ein ausgeglichenes Feuchtigkeitsniveau in der Abdeckerde. Hierdurch kann bevorzugt auch das Myzelwachstum bei Pilzen gefördert werden, weil durch Vermeidung von Austrocknung auch des Substrats bevorzugt konstant Wasser verfügbar ist.

Eine hohe Wasserspeicherfähigkeit ermöglicht bevorzugt auch, dass hinzugefügtes Wasser gleichmäßig von der Abdeckerde aufgenommen wird, ohne dass Bereiche entstehen, in denen nicht-aufgenommenes Wasser die Luft verdrängt, und sorgt somit für einen guten Gasaustausch und Sauerstoffzufuhr für das Myzel und die Mikroorganismen.

Eine Wasserspeicherfähigkeit von 50 bis 150 Vol% ermöglicht bevorzugt eine geeignete Bewässerungshäufigkeit, was bevorzugt sowohl arbeitsökonomische als auch ökologische Vorteile mit sich bringt. Ziel ist es, möglichst wenige Arbeitsschritte und auch wenige Störungen der Pilzkultur zu verursachen.

In einer weiteren bevorzugten Ausführungsform liegt der Salzgehalt der Abdeckerde vorzugsweise unter 2,0 g/l.

Der Salzgehalt bezeichnet bevorzugt die Konzentration von gelösten Salzen in einem Material, zum Beispiel einer Erde, oder einer Flüssigkeit. In Erden umfasst der Salzgehalt bevorzugt verschiedene Ionen wie Natrium (Na⁺), Kalium (K⁺), Calcium (Ca²⁺), Magnesium (Mg²⁺), Chlorid (Cl⁻) und Sulfate (SO₄²⁻).

Ein zu hoher Salzgehalt in der Abdeckerde ist bevorzugt zu vermeiden, da er den osmotischen Druck erhöht und die Fähigkeit des Mycels seinen Wasserhaushalt zu regulieren, beeinträchtigt. Dies kann die Fruchtkörperbildung der Pilze negativ beeinflussen

Ein Salzgehalt von unter 3 g/l, bevorzugt unter 2 g/l in der Abdeckerde ist besonders vorteilhaft, da die Abdeckerde hauptsächlich zur Regulation der Feuchtigkeit und zur Förderung der Fruchtkörperbildung dient. Ein höherer Salzgehalt kann die Wasserverfügbarkeit der Abdeckerde verringern. Durch einen höheren osmotischen Druck können die Pilze schlechter Wasser aufnehmen und dadurch schneller austrocknen. Die Mikroorganismen spielen bevorzugt eine wichtige Rolle bei der Induktion der Fruktifikation. Ein Salzgehalt von weniger als 2 g/l trägt also bevorzugt zu einer vorteilhaften mikrobiellen Aktivität und einer gleichmäßigen Wasserabgabe in der Abdeckerde bei. Hierdurch kann die Fruchtkörperbildung effizient gefördert werden.

In einer weiteren bevorzugten Ausführungsform liegt der pH-Wert der torffreien Abdeckerde bei 7,5 bis 8,5.

Ein pH-Wert zwischen 7,5 und 8,5 wird in der Abdeckerde für die Pilzzucht bevorzugt, da er besonders vorteilhafte Bedingungen für die Fruchtkörperbildung schafft. Er kann die Aktivität wichtiger Mikroorganismen unterstützen. Die Abdeckerde schafft bevorzugt ein geeignetes Mikroklima, das den Übergang des Myzels zur Fruchtkörperbildung begünstigt. Ein leicht alkalischer pH-Wert in diesem Bereich stabilisiert bevorzugt die mikrobiellen Prozesse, die das Myzel zur Fruktifikation stimulieren. Zu saure Bedingungen würden bevorzugt das Wachstum dieser Mikroorganismen hemmen und somit die Fruchtkörperbildung beeinträchtigen.

Ein weiterer Vorteil dieses pH-Bereichs liegt bevorzugt darin, dass er das Wachstum unerwünschter Organismen, zum Beispiel schädlicher Bakterien oder konkurrierender Pilze, hemmt, die in sauren Bedingungen besser gedeihen. Dadurch wird bevorzugt die Wahrscheinlichkeit von Kontaminationen verringert.

In einem weiteren Aspekt betrifft die Erfindung eine Verwendung einer torffreien Abdeckerde zur Zucht von Pilzen, vor allem für Heil-, Vital- und Speisepilze. Die Pilze werden bevorzugt ausgewählt aus einer Gruppe umfassend die Familie der *Agaricaceae,* vorzugsweise *Agaricus bisporus* und *Agaricus subrufescens.*

Die Abdeckerde eignet sich bevorzugt zur Zucht einer Vielzahl von Pilzen. Insbesondere eignet sie sich zur Zucht von Pilzen aus der Familie der *Agaricaceae,* vorzugsweise *Agaricus bisporus* und/oder *Agaricus subrufescens.*

Insbesondere die Zucht von Pilzen aus der Familie der Agaricaceae (Champignonverwandten) ist bevorzugt, weil sich in der Familie der Champignonverwandten kommerziell interessante Pilze befinden, darunter Speisepilze.

Die Zucht von *Agaricus bisporus* (Zucht-Champignon), *Agaricus subrufescens* (Brasilianischer Mandel-Egerling) und *Agaricus bitorquis* (Stadtchampignon) unter Verwendung der Abdeckerde ist besonders bevorzugt, weil es sich um weit verbreitete Speisepilze handelt.

Die Pilze aus der Zucht mit torffreier Abdeckerde sind bevorzugt kräftiger und aromatischer als solche aus einer Zucht mit torfhaltiger Abdeckerde.

## Patentansprüche

1. Torffreie Abdeckerde zur Pilzzucht, bestehend aus mindestens einem organischen, faserigen Material
**dadurch gekennzeichnet, dass**
die torffreie Abdeckerde 50 - 100 Vol% Grünschnittkompost und bis zu 50 Vol% Holzfasern umfasst.

2. Torffreie Abdeckerde zur Pilzzucht gemäß dem vorherigen Anspruch
**dadurch gekennzeichnet, dass**
die torffreie Abdeckerde 0,5 - 5 Vol% Calciumsulfat umfasst.

3. Torffreie Abdeckerde zur Pilzzucht gemäß einem oder mehreren der vorherigen Ansprüche
**dadurch gekennzeichnet, dass**
die torffreie Abdeckerde bis zu 0,5 - 5 Vol% Calciumcarbonat umfasst.

4. Torffreie Abdeckerde zur Pilzzucht gemäß einem oder mehreren der vorherigen Ansprüche
**dadurch gekennzeichnet, dass**
die torffreie Abdeckerde bis zu 5 Vol% einer Proteinquelle umfasst.

5. Torffreie Abdeckerde zur Pilzzucht gemäß dem vorherigen Anspruch
**dadurch gekennzeichnet, dass**
die Proteinquelle bevorzugt ausgewählt ist aus einer Gruppe umfassend Leguminosen, wie Luzerne, Lupine, Soja, Kleearten, Erbsen, Linsen; Getreide und Pseudogetreide, wie Amaranth, Dinkel, Quinoa, Hafer, Hirse, Weizen, Roggen, Gerste, Mais; andere proteinreiche Pflanzen, wie Hanf, Flachs, Sonnenblumenkerne, Raps, Kürbiskerne.

6. Torffreie Abdeckerde zur Pilzzucht gemäß einem oder mehreren der vorherigen Ansprüche
**dadurch gekennzeichnet, dass**
die torffreie Abdeckerde bis zu 30 Vol% Rindenhumus umfasst.

7. Torffreie Abdeckerde zur Pilzzucht gemäß einem oder mehreren der vorherigen Ansprüche
**dadurch gekennzeichnet, dass**
die torffreie Abdeckerde bis zu 30 Vol% Holzschaum umfasst.

8. Torffreie Abdeckerde zur Pilzzucht gemäß einem oder mehreren der vorherigen Ansprüche
**dadurch gekennzeichnet, dass**
die torffreie Abdeckerde 0,15 - 1,5 Vol% eines oder mehrerer Dünger umfasst, wobei der oder die Dünger bevorzugt die Makronährstoffe N und P umfassen.

9. Torffreie Abdeckerde zur Pilzzucht gemäß einem oder mehreren der vorherigen Ansprüche
**dadurch gekennzeichnet, dass**
die torffreie Abdeckerde bis zu 10 Vol% Ton umfasst, wobei der Ton bevorzugt in Form von Pulver vorliegt.

10. Torffreie Abdeckerde zur Pilzzucht gemäß einem oder mehreren der vorherigen Ansprüche
**dadurch gekennzeichnet, dass**
der Grünschnittkompost eine Körnigkeit von 0 bis ≤25 mm und/oder einen pH-Wert von 6,5 bis 8,5, bevorzugt 7,0 bis 8,5, besonders bevorzugt 7,5 bis 8,5 aufweist.

11. Torffreie Abdeckerde zur Pilzzucht gemäß einem oder mehreren der vorherigen Ansprüche
**dadurch gekennzeichnet, dass**
die Holzfasern einen pH-Wert von 5,0 - 5,5 aufweisen.

12. Torffreie Abdeckerde zur Pilzzucht gemäß einem oder mehreren der vorherigen Ansprüche
**dadurch gekennzeichnet, dass**
eine Wasserspeicherfähigkeit der torffreien Abdeckerde bei 50 - 150 Vol%, liegt.

13. Torffreie Abdeckerde zur Pilzzucht gemäß einem oder mehreren der vorherigen Ansprüche
**dadurch gekennzeichnet, dass**
ein Salzgehalt der torffreien Abdeckerde unter 3,0 g/l, bevorzugt unter 2,0 g/l liegt.

14. Torffreie Abdeckerde zur Pilzzucht gemäß einem oder mehreren der vorherigen Ansprüche
**dadurch gekennzeichnet, dass**
ein pH-Wert der torffreien Abdeckerde bei 7,5 - 8,5 liegt.

15. Verwendung einer torffreien Abdeckerde gemäß einem oder mehreren der Ansprüche 1-14 zur Zucht von Pilzen, bevorzugt ausgewählt aus einer Gruppe umfassend die Familie der Agaricaceae, vorzugsweise *Agaricus bisporus, Agaricus subrufescens.*
